# EUROPÄISCHE PATENTSCHRIFT

(11) **EP 0 520 998 B1**
(45) Veröffentlichungstag und Bekanntmachung des Hinweises auf die Patenterteilung: **30.03.1994**
(21) Anmeldenummer: 91903649.1
(22) Anmeldetag: 25.01.1991
(51) Int. Cl.: B60J 1/10

(54) **FAHRZEUGKAROSSERIE MIT EINER SCHEIBE**
VEHICLE BODY WITH PANE
CARROSSERIE DE VEHICULE POURVUE D'UNE VITRE

(30) Priorität: 17.03.1990 DE 4008702
(43) Veröffentlichungstag der Anmeldung: 07.01.1993
(73) Patentinhaber: AUDI AG, 85045 Ingolstadt (DE)
(72) Erfinder: HEIDL, Stefan, D-8074 Gaimersheim (DE); HÄNLE, Edgar, D-8071 Wettstetten (DE); EDER, Gerd, D-8833 Obereichstätt (DE)
(74) Vertreter: Engelhardt, Harald
(86) Internationale Anmeldenummer: EP9100147
(87) Internationale Veröffentlichungsnummer: WO9114591

(56) Entgegenhaltungen:
- EP-A- 0 167 928
- EP-A- 0 190 870
- EP-A- 0 242 223
- DE-A- 2 855 050
- FR-A- 2 577 483

## Beschreibung

Die Erfindung bezieht sich auf eine in einer Fahrzeugkarosserie aufgenommene Scheibe mit einem Rahmen gemäß dem Oberbegriff des Patentanspruchs 1.

Eine gattungsgemäße Scheibe ist aus der EP-A-0 242 223 bekannt. Die dreieckförmige Seitenscheibe ist auf einer Seite mit der Fahrzeugkarosserie verschraubt, während die beiden anderen Seiten am Rahmen angeordnete Rastelemente aufweisen. Zur Befestigung der Seitenscheibe mittels der Rastelemente ist es nur notwendig, die Rastelemente in zugeordnete Öffnungen in einem Flansch der Fahrzeugkarosserie einzuführen und die Scheibe anzudrücken. Dabei hintergreifen federnde, mit Zacken versehene Bügel der Rastelemente den Flansch und sichern dadurch die Verbindung. Zum Auswechseln der Scheibe ist es erforderlich, daß die Befestigungselemente bzw. Rastelemente vom Fahrgastraum aus zugänglich gemacht werden.

Der Erfindung liegt die Aufgabe zugrunde, eine gattungsgemäße Scheibe mit einem Rahmen so auszubilden, daß sie einfach montierbar und wieder leicht demontierbar ist, und zwar ohne daß irgendwelche Befestigungselemente vom Fahrgastraum aus gelöst werden müssen.

Die Aufgabe wird durch die kennzeichnenden Merkmale des Patentanspruchs 1 gelöst.

Die Montage des die Scheibe umgebenden Rahmens erfolgt in der Weise, daß die mit den Halteteilen versehene Seite des Rahmens schräg an den Fensterausschnitt angesetzt wird, wobei die Halteteile in zugeordnete Aufnahmen der Fahrzeugkarosserie eingreifen. Anschließend erfolgt eine Ausrichtung der Scheibe - zweckmäßig zu einer Ecke hin - und zuletzt ein Verschwenken des Rahmens in die Einbaulage. In der Einbaulage verrasten die Halteteile mit den zugeordneten Aufnahmen in der Fahrzeugkarosserie und sichern dadurch die Verbindung.

Auf zumindest einer der Seiten, die der die Halteteile aufweisenden Seite gegenüberliegt, wird abschließend der Rahmen von außen her mit der Fahrzeugkarosserie verschraubt oder vernietet. Wenn der Rahmen mit der Scheibe entfernt werden soll, ist es nur notwendig, von außen her die Befestigungselemente zu lösen bzw. aufzubohren, den Rahmen mit der Scheibe anzukippen und herauszunehmen. Es ist also nicht notwendig, vom Fahrgastraum her irgendwelche Verkleidungsteile, Dämpfungsmaterialien etc. zum Ausbau der Seitenscheibe zu entfernen. Ein Ausbau von feststehenden Scheiben, insbesondere Seitenscheiben von Kraftfahrzeugen, kann beispielsweise dann notwendig werden, wenn der die Scheibe umgebende Abschnitt der Fahrzeugkarosserie nachlackiert werden muß. Auch bereits bei der Fahrzeugmontage kann es notwendig werden, die Seitenscheibe für Nacharbeiten herauszunehmen.

Die Befestigung des Rahmens auf seiner den Halteteilen gegenüberliegenden Seite erfolgt durch Schrauben oder Nieten. Bei der Großserienfertigung hat es sich als zweckmäßig erwiesen, den Rahmen durch Blindniete an der Fahrzeugkarosserie zu befestigen. Wenn die Scheibe mit dem Rahmen ausgebaut werden soll, müssen die Nieten nur aufgebohrt und durch neue ersetzt werden. Wenn kein Blindnietgerät vorhanden ist, kann die Befestigung natürlich auch mittels Blechschrauben erfolgen. In gleicher Weise ist es möglich, gleich von Anfang an anstelle der Blindniete Schrauben vorzusehen.

Besonders vorteilhaft ist, wenn die Scheibe mit dem Rahmen ein hinteres Seitenfenster bildet, welches sich an eine Seitentüre anschließt, und daß diejenige Seite, über die der Rahmen mit der Fahrzeugkarosserie verschraubt oder vernietet ist, sich an die Seitentüre anschließt, derart, daß bei geöffneter Seitentüre die Befestigungselemente zugänglich sind. Diese Ausgestaltung stellt sicher, daß zum einen die Befestigungselemente von außen zugänglich sind; andererseits die Befestigungselemente jedoch bei geschlossener Fahrzeugtüre nicht sichtbar und nicht zugänglich sind, so daß die Diebstahlsicherheit gewährleistet ist.

Bei der vorgeschlagenen Scheibenbefestigung hat es sich als Vorteil erwiesen, wenn der Rahmen in an sich bekannter Weise an die Scheibe angespritzt ist. Dabei können auch die Halteteile, beispielsweise Klammern, vor dem Umspritzen der Scheibe in deren Randbereich aufgeschoben sein.

Gemäß einer besonders vorteilhaften Ausgestaltung der Erfindung kann der Rahmen eine Dichtung aufnehmen, welche an einem etwa parallel zur Scheibe verlaufenden Flansch der Fahrzeugkarosserie anliegt. Während der Rahmen nur der Halterung der Scheibe dient, und dafür optimal ausgebildet sein kann, wird die Abdichtung des Rahmens gegenüber der Karosserie durch eine separate Dichtung gebildet. Eine unmittelbare Abdichtung zwischen dem Rahmen und der Fahrzeugkarosserie durch den Rahmen selbst ist meist aufgrund vorhandener Toleranzen nicht oder nur mit großem Aufwand möglich.

Die Dichtung kann beispielsweise durch eine Lippe oder zweckmäßig durch ein Hohlprofil gebildet sein. Es ist möglich, die Dichtung einstückig an den Rahmen anzuformen. Um die Dichtung optimal auszubilden und insbesondere auch ein Hohlprofil realisieren zu können, ist es von Vorteil, wenn die Dichtung in einer Rinne am Rahmen gehalten ist.

Schließlich kann gemäß einer vorteilhaften Ausgestaltung der Erfindung der Rahmen auf der Seite, über die er mit der Fahrzeugkarosserie verschraubt oder vernietet ist, eine elastische Lippe aufweisen, welche die Befestigungselemente abdeckt. Wenn die Scheibe mit dem Rahmen ein hinteres Seitenfenster bildet, welches sich an eine Seitentüre anschließt, dann werden die Befestigungselemente zweckmäßig nicht senkrecht zur Fläche der Scheibe, sondern von der Seite her, nämlich durch den Türrahmen in den Rahmen für die Scheibe eingedreht. Die an den Rahmen angeformte Lippe müßte, um die Befestigungselemente abzudecken dann zur Scheibenfläche einen etwa rechten Winkel einschließen und in den Türausschnitt hineinragen.

Ein Ausführungsbeispiel der Erfindung ist in der Zeichnung dargestellt und wird nachfolgend näher beschrieben. Es zeigt
- Fig. 1: eine Scheibe mit einem Rahmen, welche ein hinteres Seitenfenster eines Personenkraftwagens bildet während des Montagevorganges,
- Fig. 2: die Scheibe mit dem Rahmen aus Fig. 1 von hinten gesehen,
- Fig. 3: die Einzelheit R aus den Figuren 1 und 2 in Explosionsdarstellung,
- Fig. 4: die Befestigung des Rahmens über die in Fig. 3 dargestellten Befestigungswinkel an der Fahrzeugkarosserie,
- Fig. 5: das Einsetzen des Rahmens, wobei am Rahmen befestigte Halteteile in die an der Fahrzeugkarosserie festgelegte Aufnahmen eingreifen,
- Fig. 6: eine der Fig. 6a entsprechende Darstellung mit in Einbaulage befindlichen Rahmen (Schnitt A-A gemäß Fig. 1),
- Fig. 7: in Einbaulage den Schnitt B-B gemäß Fig. 1 und
- Fig. 8: in Einbaulage den Schnitt C-C aus Fig. 1.

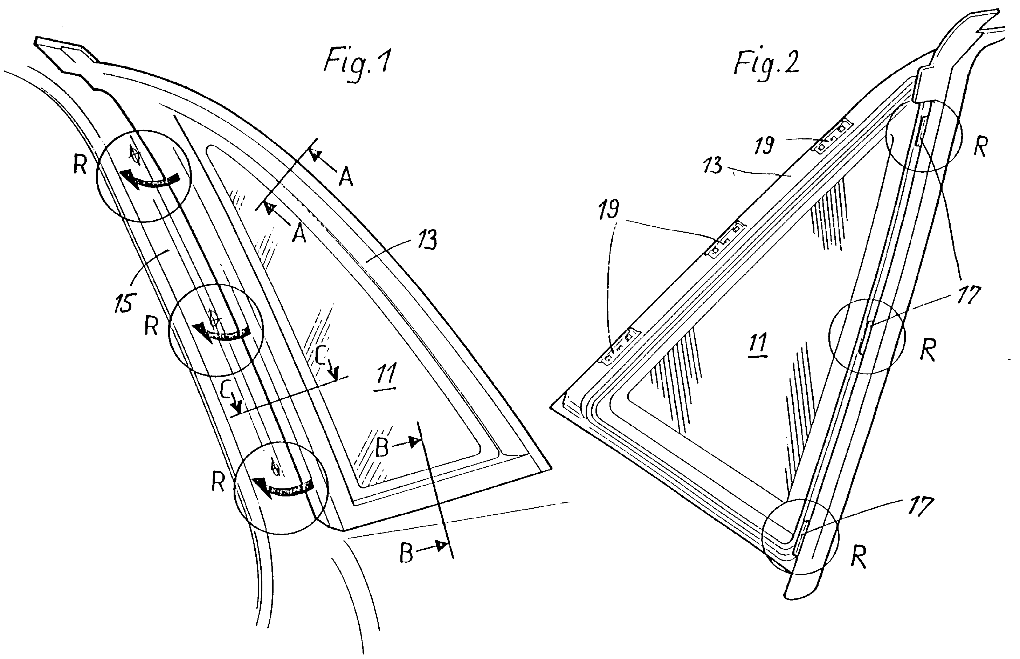

Eine in Fig. 1 dargestellte dreieckförmige Scheibe 11 ist in einem Rahmen 13 aufgenommen, welcher durch Umspritzen der Scheibe 11 erzeugt wurde. Die Scheibe 11 bildet ein hinteres Seitenfenster eines Personenkraftwagens, welcher sich an eine Seitentüre anschließt (nicht dargestellt). Zwischen der Seitentüre und dem Scheibenrahmen erstreckt sich eine etwa senkrechte Säule 15 der Fahrzeugkarosserie.

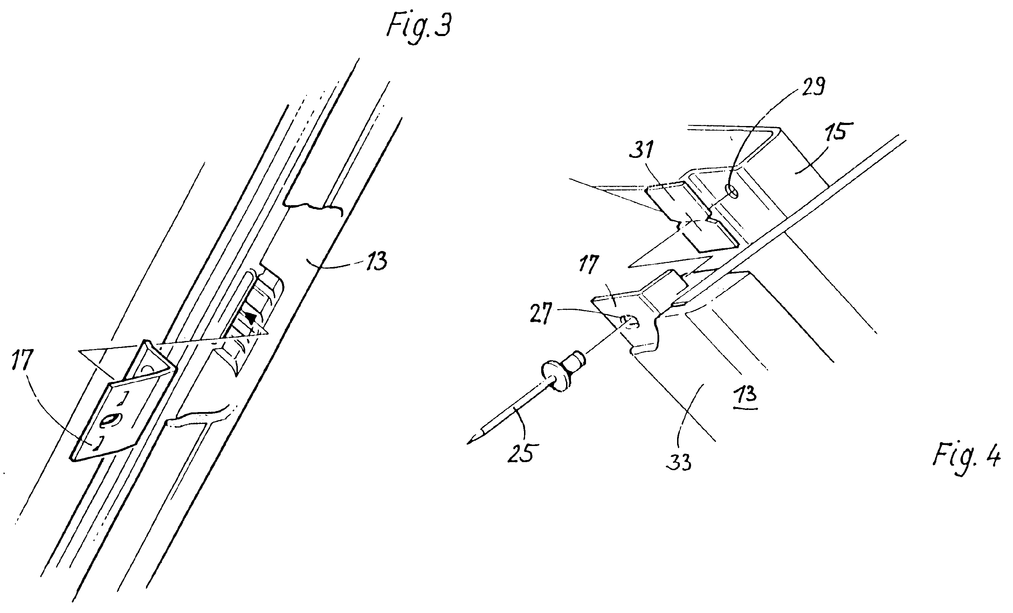

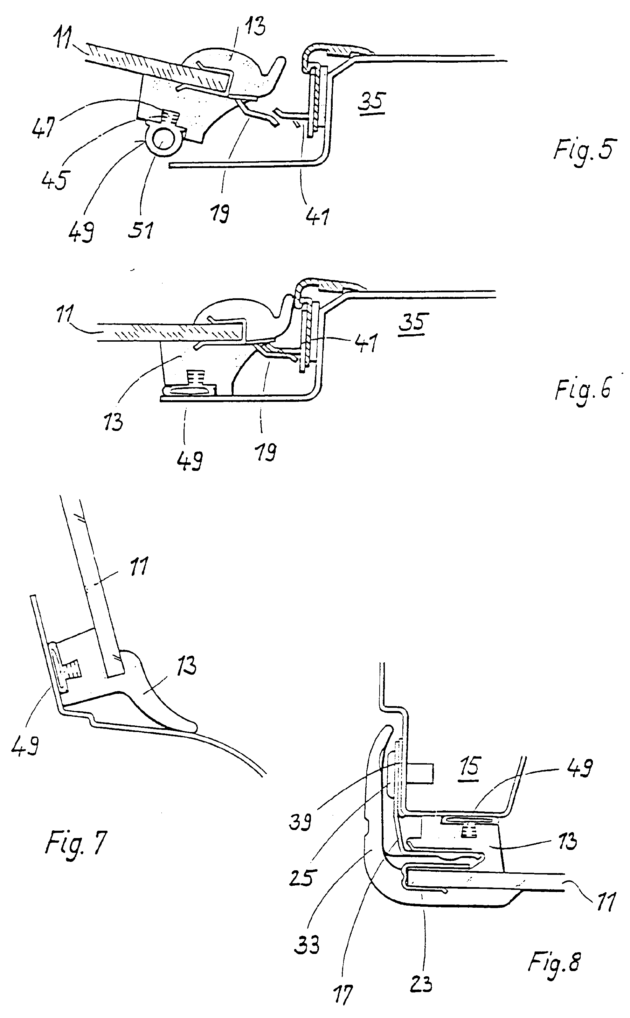

Zur Befestigung des Rahmens in dem Fensterausschnitt der Fahrzeugkarosserie sind an der Rückseite der der Säule 15 zugewandten Seite des Rahmens Befestigungswinkel 17 und auf der gegenüberliegenden Seite Halteteile 19 angeordnet, wie dies aus Fig. 2 zu ersehen ist. Fig. 3 zeigt die Einzelheit R aus Fig. 2, nämlich einen Befestigungswinkel 17 vor seiner Festlegung an dem Rand der Scheibe. Dies kann, wie vorstehend ausgeführt, vor dem Umspritzen erfolgen oder, wie in Fig. 3 dargestellt, nachträglich geschehen. Dazu ist in dem Rahmen eine entsprechende Aussparung 21 vorgesehen, über welche der Befestigungswinkel nachträglich eingeschoben ist. Der Befestigungswinkel 17 kann dabei entweder die Außenseite der Scheibe übergreifen oder in eine Klammer 23 mit einer Tasche eingreifen, wie dies etwa in Fig. 8 dargestellt ist. Die Klammer 23 wird - wie auch die Halteteile 19 - vor dem Umspritzen der Scheibe 11 auf diese aufgebracht.

Fig. 4 zeigt die Befestigung des Rahmens 13 an der Säule 15. Die Befestigung erfolgt durch je einen Blindniet 25, welcher durch eine Öffnung 27 in dem Befestigungswinkel 17 und eine Bohrung 29 in der Säule 15 hindurchgeführt wird. Wie die Zeichnung zeigt, ist an der Säule 15 im Bereich der Befestigungswinkel 17 eine elastische Unterlage 31 aufgebracht.

Die Befestigungswinkel 17 und nach erfolgter Befestigung auch die Köpfe der Blindniete 25 sind durch eine an den Rahmen einstückig angeformte Lippe 33 abgedeckt. Zum Setzen der Blindniete 25 muß die Lippe 33 deshalt im Bereich der Befestigungsstellen angehoben werden.

In den Figuren 5 und 6 (entsprechend dem Schnitt A-A aus Fig. 1) ist das Einsetzen des Rahmens 13 im Bereich der Dachsäule 35 dargestellt. Dazu wird der Rahmen 13 schräg angesetzt, wobei darauf zu achten ist, daß die am Rahmen 13 fixierten Halteteile 19 in zugeordnete Aufnahmen 41 an der Dachsäule 35 eingreifen. Nun kann der Rahmen noch zu dem Fensterausschnitt eingerichtet und eine Sichtkontrolle der Lage durchgeführt werden. Anschließend wird der Rahmen 13 auf die Säule 15 zu in die Einbaulage verschwenkt. Dabei verrasten die Halteteile 19 mit den Aufnahmen 41, wodurch eine sichere Befestigung des Rahmens 13 mit der Dachsäule 35 erreicht ist.

Aus Fig. 6 ist zu erkennen, daß der Rahmen 13 an seiner Innenseite eine Rinne 45 aufweist, welche klemmend einen Fuß 47 einer Dichtung 49 mit einem Hohlprofil 51 aufnimmt. Im Einbauzustand des Rahmens 13 liegt das Hohlprofil unter Vorspannung an dem Flansch 37 an, wie dies die Figuren 6, 7 und 8 deutlich zeigen.

Fig. 7 zeigt einen Schnitt durch den horizontalen, nicht an der Karosserie befestigten Abschnitt des Rahmens 13.

Schließlich ist in Fig. 8 ein Schnitt durch die Befestigungsstelle an der Säule 15 dargestellt. Die an den Rahmen 13 einstückig angeformte Lippe 33 steht etwa rechtwinkelig von der Scheibe 11 ab und überdeckt die Befestigungswinkel 17 und die Blindniete 25.

Durch die vorgeschlagene Befestigung ist eine schnelle Montage und Demontage möglich. Die Verrastung des Rahmens 13 im Bereich der Dachsäule 35 bildet ein zweiwertiges Lager, wobei der hörbare Schnappeffekt eine gute Kontrolle für die richtige Montage darstellen kann.

## Patentansprüche

1. In einer Fahrzeugkarosserie aufgenommene Scheibe (11) mit einem Rahmen (13) und am Rahmen (13) angeordneten Befestigungselementen, mittels derer der Rahmen (13) lösbar an der Fahrzeugkarosserie befestigbar ist, wobei eine Seite des Rahmens (13) mindestens ein Halteteil (19) aufweist, welches in eine zugeordnete Aufnahme (41) an der Fahrzeugkarosserie eingreift, dadurch gekennzeichnet,
a) daß der die Scheibe (11) umgebende Rahmen (13) mit seiner die Halteteile (19) aufweisenden Seite in einer bestimmten Winkellage schräg an den Fensterausschnitt der Fahrzeugkarosserie ansetzbar ist, und daß dabei die Halteteile (19) in die Aufnahmen (41) der Fahrzeugkarosserie eingreifen und damit verrasten, wenn der Rahmen (13) abschließend in seine Einbaulage verschwenkt wird,
b) daß die Halteteile (19) und/oder die Aufnahmen (41) entsprechend der Ansetzrichtung des Rahmens (13) schräge Fügeflächen und in Einbaulage des Rahmens (13) wirksame Rastelemente aufweisen, und daß
c) zumindest die Seite des Rahmens (13), die der die Halteteile (19) aufweisenden Seite gegenüberliegt, von außen her durch Schrauben oder Niete (25) mit der Fahrzeugkarosserie verbunden ist.

2. Scheibenbefestigung nach Anspruch 1, dadurch gekennzeichnet, daß die Scheibe (11) mit dem Rahmen (13) ein hinteres Seitenfenster bildet, welche sich an eine Seitentüre anschließt, und daß diejenige Seite, über die der Rahmen (13) mit der Fahrzeugkarosserie verschraubt oder vernietet ist, sich an die Seitentüre anschließt, derart, daß bei geöffneter Seitentüre die Befestigungselemente zugänglich sind.

3. Scheibenbefestigung nach einem der Ansprüche 1 und 2, dadurch gekennzeichnet, daß der Rahmen (13) in an sich bekannter Weise an die Scheibe (11) angespritzt ist.

4. Scheibenbefestigung nach Anspruch 3, dadurch gekennzeichnet, daß die Halteteile (19) vor dem Umspritzen der Scheibe in deren Randbereich aufgeschobene Klammern sind.

5. Scheibenbefestigung nach einem der Ansprüche 1 bis 4, dadurch gekennzeichnet, daß der Rahmen (13) eine Dichtung (49) aufnimmt, welche an einem etwa parallel zur Scheibe (11) verlaufenden Flansch der Fahrzeugkarosserie anliegt.

6. Scheibeneinfassung nach Anspruch 5, dadurch gekennzeichnet, daß die Dichtung (49) ein Hohlprofil (51) ist.

7. Scheibeneinfassung nach Anspruch 5 oder 6, dadurch gekennzeichnet, daß die Dichtung an den Rahmen (13) einstückig angeformt ist.

8. Scheibeneinfassung nach Anspruch 5 oder 6, dadurch gekennzeichnet, daß die Dichtung (49) in einer Rinne (45) am Rahmen (13) gehalten ist.

9. Scheibeneinfassung nach einem der Ansprüche 1 bis 8, dadurch gekennzeichnet, daß der Rahmen (13) auf der Seite, über die er mit der Fahrzeugkarosserie verschraubt oder vernietet ist, eine elastische Lippe (33) aufweist, welche die Befestigungselemente abdeckt.

## Claims

1. Window (11) received in a vehicle body and having a frame (13) and fastening elements which are arranged on the frame (13) and by means of which the frame (13) can be fastened releasably to the vehicle body, one side of the frame (13) having at least one holding part (19) which engages into an associated receptacle (41) on the vehicle body, characterized
a) in that the frame (13) surrounding the window (11) can, with its side having the holding parts (19), be applied to the window cutout of the vehicle body obliquely in a specific angular position, and in that the holding parts (19) engage into the receptacles (41) of the vehicle body and catch with these when the frame (13) is finally pivoted into its installation position,
b) in that the holding parts (19) and/or the receptacles (41) have joining faces oblique according to the direction of application of the frame (13) and catch elements effective in the installation position of the frame (13), and in that
c) at least the side of the frame (13), which is located opposite the side having the holding parts (19), is connected to the vehicle body from outside by means of screws or rivets (25).

2. Window fastening according to Claim 1, characterized in that the window (11) together with the frame (13) forms a rear side window which is adjacent to a side door, and in that that side via which the frame (13) is screwed or riveted to the vehicle body is adjacent to the side door, in such a way that, with the side door opened, the fastening elements are accessible.

3. Window fastening according to one of Claims 1 and 2, characterized in that the frame (13) is injection-moulded onto the window (11) in a manner known per se.

4. Window fastening according to Claim 3, characterized in that the holding parts (19) are clips pushed on in the edge region of the window before injection-moulding takes place around the latter.

5. Window fastening according to one of Claims 1 to 4, characterized in that the frame (13) receives a gasket (49) which bears against a flange of the vehicle body, the said flange extending approximately parallel to the window (11).

6. Window surround according to Claim 5, characterized in that the gasket (49) is a hollow profile (51).

7. Window surround according to Claim 5 or 6, characterized in that the gasket is formed in one piece onto the frame (13).

8. Window surround according to Claim 5 or 6, characterized in that the gasket (49) is held in a groove (45) on the frame (13).

9. Window surround according to one of Claims 1 to 8, characterized in that the frame (13), on the side via which it is screwed or riveted to the vehicle body, has an elastic lip (33) which covers the fastening elements.

## Revendications

1. Vitre (11) intégrée dans la carrosserie d'un véhicule, comprenant un cadre (13) et des éléments de fixation disposés sur ce cadre permettant de monter le cadre (13) de manière amovible sur la carrosserie du véhicule, un côté dudit cadre (13) présentant au moins un élément de fixation (19) introduit dans un logement (41) correspondant prévu sur la carrosserie du véhicule, caractérisée
a) en ce que le cadre (13) de la vitre (11) peut être posé, avec son côté présentant les éléments de fixation (19), avec une inclinaison donnée, contre l'ouverture de la fenêtre de la carrosserie du véhicule et en ce que les éléments de fixation sont introduits dans les logements (41) de la carrosserie du véhicule de manière à s'encliqueter dans ces derniers lorsque le cadre (13) est basculé dans sa position de montage définitive ;
b) en ce que les éléments de fixation (19) et/ou les logements (41) présentent des surfaces d'insertion inclinées et des éléments d'encliquetage maintenant le cadre (13) lorsque ce dernier est en position de montage ; et
c) en ce qu'au moins le côté opposé par rapport au côté du cadre (13) présentant les éléments de fixation (19) est fixé, de l'extérieur, à la carrosserie du véhicule par le moyen de vis ou de rivets (25).

2. Fixation de vitre selon la revendication 1, caractérisée en ce que la vitre (11) constitue, avec le cadre (13), une fenêtre latérale arrière adjacente à une porte latérale et en ce que le côté fixant le cadre (13) à la carrosserie du véhicule, par vis ou par rivets, est adjacent à la porte latérale de manière à permettre l'accès aux éléments de fixation lorsque ladite porte latérale est ouverte.

3. Fixation de vitre selon l'une des revendications 1 et 2, caractérisée en ce que le cadre (13) est injecté à la vitre (11) selon un procédé généralement connu.

4. Fixation de vitre selon la revendication 3, caractérisée en ce que les éléments de fixation (19) sont des pinces glissées sur le bord de la vitre dans sa zone marginale avant l'injection sur la vitre.

5. Fixation de vitre selon l'une quelconque des revendications 1 à 4, caractérisée en ce que le cadre (13) comprend un joint (49) posé sur un rebord de la carrosserie du véhicule orientée dans un sens approximativement parallèle par rapport à la vitre (11).

6. Encadrement de vitre selon la revendication 5, caractérisé en ce que le joint (49) est un profilé creux (51).

7. Encadrement de vitre selon la revendication 5 ou 6, caractérisé en ce que le joint est fabriqué en une seule pièce avec le cadre (13).

8. Encadrement de vitre selon la revendication 5 ou 6, caractérisé en ce que le joint (49) est fixé dans une rainure (45) pratiquée sur le cadre (13).

9. Encadrement de vitre selon l'une quelconque des revendications 1 à 8, caractérisé en ce que le cadre (13) dispose, du côté sur lequel il est fixé sur la carrosserie du véhicule par vis ou par rivets, d'une lèvre élastique (33) recouvrant les éléments de fixation.
